**Europäisches Patentamt**

**European Patent Office**

**Office européen des brevets**

(19)

(11) **EP 0 676 319 B1**

(12)     **EUROPÄISCHE PATENTSCHRIFT**

(45) Veröffentlichungstag und Bekanntmachung des Hinweises auf die Patenterteilung:
**31.05.2000 Patentblatt 2000/22**

(51) Int Cl.⁷: **B60T 8/00**

(21) Anmeldenummer: **95104323.1**

(22) Anmeldetag: **23.03.1995**

(54) **Verfahren und Vorrichtung zum Einstellen der Bremskraftaufteilung zwischen einem Zugfahrzeug und dem Anhänger**

Method and device for controlling the brake force distribution between a tractor and a trailer

Procédé et dispositif pour régler la répartition de la force de freinage entre un tracteur et la remorque

(84) Benannte Vertragsstaaten:
**DE FR GB IT NL SE**

(30) Priorität: **11.04.1994 DE 4412430**

(43) Veröffentlichungstag der Anmeldung:
**11.10.1995 Patentblatt 1995/41**

(73) Patentinhaber: **KNORR-BREMSE Systeme für Nutzfahrzeuge GmbH
80809 München (DE)**

(72) Erfinder:
• **Mayr-Fröhlich, Mathias
D-81243 München (DE)**

• **Utzt, Alfred
D-82256 Fürstenfeldbruck (DE)**

(74) Vertreter: **von Bülow, Tam, Dr.
Patentanwalt
Mailänder Strasse 13
81545 München (DE)**

(56) Entgegenhaltungen:
**EP-A- 0 385 648            EP-A- 0 532 863
DE-A- 4 228 413            DE-C- 4 210 576**

## Beschreibung

Die Erfindung bezieht sich auf ein Verfahren zum Einstellen der Bremskraftaufteilung zwischen einem Zugfahrzeug und einem Anhänger gemäß dem Patentanspruch 1 und auf eine Vorrichtung gemäß Anspruch 6 zur Durchführung des Verfahrens.

Es ist seit langem bekannt, daß die Bremskraft zwischen einem Zugfahrzeug und einem Anhänger in Abhängigkeit von der Beladung des Anhängers einzustellen ist, um optimale Bremswirkung zu erhalten und um die Koppelkräfte an der Anhängerkupplung nicht zu groß werden zu lassen. Zu diesem Zweck wurde früher am Anhänger (dies gilt auch für Eisenbahnwagen) ein Umschaltventil von Hand betätigt, wenn die Beladung geändert wurde. Neuere Systeme haben diesen Vorgang dahingehend automatisiert, daß die Beladung des Anhängers, sofern dieser mit einer Luftfederung ausgestattet war, gemessen wurde und in Abhängigkeit hiervon ein Stellorgan für die Bremskraftaufteilung betätigte. Bei anderen Systemen wurde die Koppelkraft zwischen Zugfahrzeug und Anhänger an der Anhängerkupplung durch zug- oder druckempfindliche Sensoren gemessen und in Abhängigkeit von diesen Meßwerten die Bremskraftaufteilung eingestellt.

Es hat sich jedoch herausgestellt, daß die meisten Sensoren den rauhen Bedingungen des LKW- oder Eisenbahnbetriebes nicht gewachsen sind und sehr häufig ausfallen. Auch bedingt der Einsatz von Sensoren, die meist als elektromechanische Wandler ausgeführt sind, einen erheblichen Aufwand für die Signalübertragung, was meistens in Form von elektrischen Kabeln erfolgt. Werden die Signale vom Anhänger zum Zugfahrzeug oder umgekehrt übertragen, so bedingt dies zusätzlich die Verwendung von Steckverbindungen oder Steckkupplungen, die mit hohem Aufwand gegen Spritzwasser, Eindringen von Schmutz, Salz etc. geschützt werden müssen.

Aus der DE 42 10 576 C1 ist ein Verfahren zur Bestimmung von Bremskennwerten bekannt, die den Zusammenhang zwischen dem Bremsdruck und der Bremskraft an einem Rad bzw. einer Achse eines Fahrzeugs oder eines Teilfahrzeugs eines Lastzugs beim Bremsvorgang definieren, wobei Sensoren zur Bestimmung der Radgeschwindigkeit und des Bremsdrucks vorgesehen sind. Während eines oder mehrerer Bremsvorgänge werden jeweils das Kräftegleichgewicht zwischen der Bremskraft und der Trägheitskraft aufgestellt und hieraus Masse bezogene Bremskennwerte für die bremsdrucksensierten Räder und ein Mittelwert für den massebezogenen Bremskennwert aller nichtbremsdrucksensierten Räder ermittelt.

Die DE 42 28 413 A1 beschreibt ein Verfahren zur Bestimmung der Masse eines Kraftfahrzeugs, bei dem zu zwei unterschiedlichen Zeitpunkten mindestens zwei Längsbeschleunigungen und die zu diesen Zeitpunkten vorliegenden Vortriebskräfte erfaßt werden und aus der Differenz der Vortriebskräfte und der Differenz der Längsbeschleunigungen die Fahrzeugmasse bestimmt wird.

Aufgabe der vorliegenden Erfindung ist es, das eingangs genannte Verfahren und die Vorrichtung zu dessen Durchführung dahingehend zu verbessern, daß unter Ausnutzung von ohnehin vorhandenen Sensoren zuverlässige Größen ermittelt werden, die eine Einstellung der Bremskraftaufteilung und damit auch eine Optimierung der Koppelkräfte zwischen Zugfahrzeug und Anhänger gestatten.

Diese Aufgabe wird für das Verfahren durch die in Patentanspruch 1 und für die Vorrichtung durch die in Patentanspruch 6 angegebenen Merkmale gelöst.

Das Grundprinzip der Erfindung basiert auf der Aufstellung einer Energiebilanz des Fahrzeuges zu verschiedenen Zeitpunkten aufgrund von wenigen Meßgrößen, die ohnehin vom in Fahrzeug vorhandenen Blockierschutzsystem und der Antriebssteuerung vorliegen. Die Gesamtenergie eines fahrenden Fahrzeuges setzt sich aus folgenden Komponenten zusammen: Antriebsenergie, die vom Antriebsmotor an das Fahrzeug geliefert wird; kinetische Energie des Fahrzeuges (einschließlich Rotationsenergie der Räder); potentielle Energie bei durchfahrenen Höhendifferenzen, sowie den "Verlustenergien" aufgrund Windwiderstand, Rollwiderstand und ggf. aufgewandte bzw. in Wärme umgewandelte Bremsenergie. Stellt man diese Energiebilanz für drei verschiedene Zeitpunkte (t0,t1 und t2) auf, so sind nach dem Energieerhaltungssatz diese drei Energien gleich. Wie nachfolgend im Detail gezeigt wird, erhält man hiermit zwei Gleichungen mit zwei Unbekannten, die nach den beiden Unbekannten aufgelöst werden können. Die Unbekannten sind dabei die Gesamtmasse des Zugverbundes und die Hangneigung der durchfahrenen Strecke. Hieraus läßt sich dann unter der Voraussetzung, daß die Hangneigung während des Meßzeitraumes unverändert geblieben ist, die Fahrzeugmasse bestimmen. Bei bekannter Masse des Zugfahrzeuges (z. B. Sattelschlepper, Lokomotive etc.) läßt sich dann die Masse des Anhängers bzw. der Anhänger bestimmen und daraus die Bremskraftaufteilung einstellen.

Als "Meßgrößen" benötigt man damit lediglich die Fahrzeuggeschwindigkeit, die ohnehin vom Antiblockiersystem gemessen wird, eine Kenngröße der Bremsenergie, die beispielsweise in Form des Bremsdruckes ebenfalls vom Antiblockiersystem geliefert wird und schließlich eine Kenngröße für die Antriebsleistung, die bei elektrischen Eisenbahnen beispielsweise der elektrische Strom für den Antriebsmotor ist oder bei Dieselmotoren in Form eines Signales für das vom Motor abgegebene Drehmoment von einer ebenfalls in den modernen Fahrzeugen vorhandenen elektronischen Dieselsteuerung geliefert wird. Alle übrigen für die Aufstellung der Energiebilanz benötigten fahrzeugspezifischen Kenngrößen wie z. B. Rollwiderstand, Windwiderstand etc. können als für das jeweilige Fahrzeug konstant bzw. nur von den oben genannten Meßgrößen gemäß einer vorgegebenen Funktion abhängig angesehen werden.

Diese Kenngrößen bzw. Funktionen können daher gespeichert werden und ohne zusätzliche Messungen für die Aufstellung der Energiebilanz verwendet werden.

An dieser Stelle sei ausdrücklich darauf hingewiesen, daß die vorliegende Erfindung nicht nur für Lastkraftwagen mit Anhängern wie z. B. Sattelzüge verwendet werden kann sondern auch für spur- bzw. schienengebundene Fahrzeuge wie z. B. Eisenbahnen, U-Bahnen etc.

Vorteilhafte Ausgestaltungen und Weiterbildungen der Erfindung sind den Unteransprüchen zu entnehmen.

Im folgenden wird die Erfindung anhand eines Ausführungsbeispieles im Zusammenhang mit der Zeichnung ausführlicher erläutert. Es zeigt:

Fig. 1   ein Prinzipschaltbild einer Vorrichtung nach der Erfindung und

Fig. 2   ein detaillierteres Prinzipschaltbild der Vorrichtung nach der Erfindung.

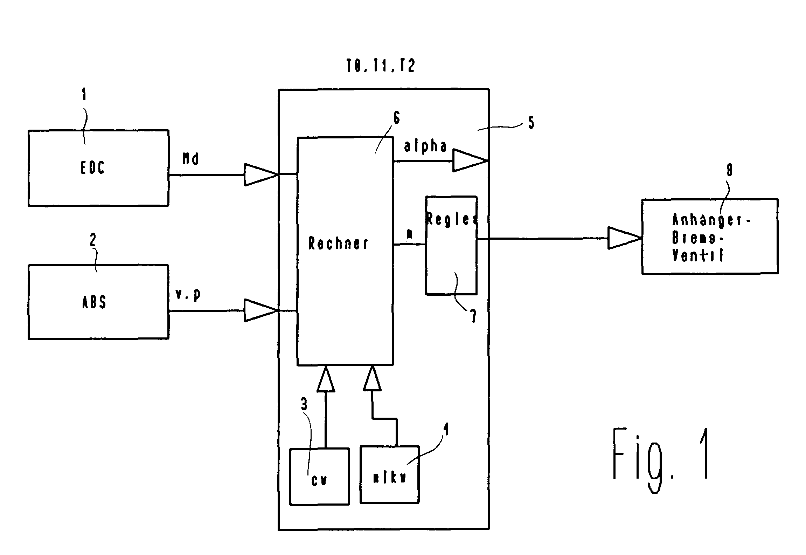

Zunächst sei auf Fig. 1 Bezug genommen. Eine erste Baueinheit, die hier eine elektronische Dieselsteuerung 1(EDC für electronic diesel control) ist, liefert eine Kenngröße Md, die in einer festen Beziehung zur Antriebsenergie steht, die vom Antriebsmotor dem Zugverbund zugeführt wird. Beispielsweise liefert die EDC 1 ein elektrisches Signal, das dem momentanen Drehmoment Md des Motors proportional ist.

Ein ebenfalls im Fahrzeug vorhandenes Antiblockiersystem 2 (ABS) liefert ein Signal v, das der Fahrzeuggeschwindigkeit entspricht und das normalerweise aus den Drehzahlen der Räder ermittelt wird. Weiterhin liefert das Antiblockiersystem 2 ein Signal, das zur aufgewandten Bremsenergie in einer festgelegten Beziehung steht, hier ein Signal p, das dem Bremsdruck entspricht. Dieses Signal muß nicht unbedingt durch einen Druckmeßfühler erfaßt werden. Es ist auch möglich, ein dem Bremsdruck entsprechendes Signal dadurch zu ermitteln, daß die Öffnungs-, Schließ- und Entlüftungszeiten von Bremsventilen gemessen werden und hieraus in bekannter Weise ein dem Bremsdruck entsprechendes Signal ermittelt wird. Da hierbei aber auch im weiteren Sinne eine Messung stattfindet, nämlich eine Zeitmessung und ein wie auch immer geartetes Erfassen der Zustände von Ventilen, wird im folgenden in diesem verallgemeinerten Sinne auch hier von einer Meßgröße gesprochen. In diesem Sinne sind also im vorliegenden Falle drei Meßgrößen vorhanden, nämlich das Motor-Moment Md, die Fahrzeuggeschwindigkeit v und der Bremsdruck t. Weiter sind für das jeweilige Fahrzeug der Luftwiderstandsbeiwert cw bekannt was durch den Block 3 dargestellt ist sowie auch die Masse des Zugfahrzeuges (z. B. Sattelschlepper, Lokomotive etc.), was durch den Block 4 dargestellt ist. (Masseänderungen durch Tankfüllung und Gewicht der Personen im Fahrzeug können vernachlässigt werden.) Die drei Messgrößen aus der EDC 1, dem ABS 2 und den Blöcken 3 und 4 werden in einer Steuereinheit 5 einer Recheneinheit 6 zugeführt, die aus diesen Eingangsgrößen ein Signal m erzeugt, das der Masse des Anhängers oder der Anhänger entspricht. Dieses Signal wird einem Regler 7 zugeführt, der eine Stellgröße erzeugt, die dem Anhängerbremsventil 8 des Anhängers oder der Anhänger zugeführt wird und dort einen Parameter der Bremskraftverteilung einstellt. Zusätzlich kann die Recheneinheit 6 auch noch ein weiteres Signal $\alpha$ erzeugen, das dem Hangneigungswinkel der gerade befahrenen Strecke entspricht. Beim vorliegenden Ausführungsbeispiel wird dieses Signal nicht für die Einstellung von Bremsparametern verwendet. Es wäre jedoch ohne weiteres möglich, dieses Signal hierzu zu verwenden oder für andere Funktionen wie z. B. Getriebesteuerung oder ähnliches.

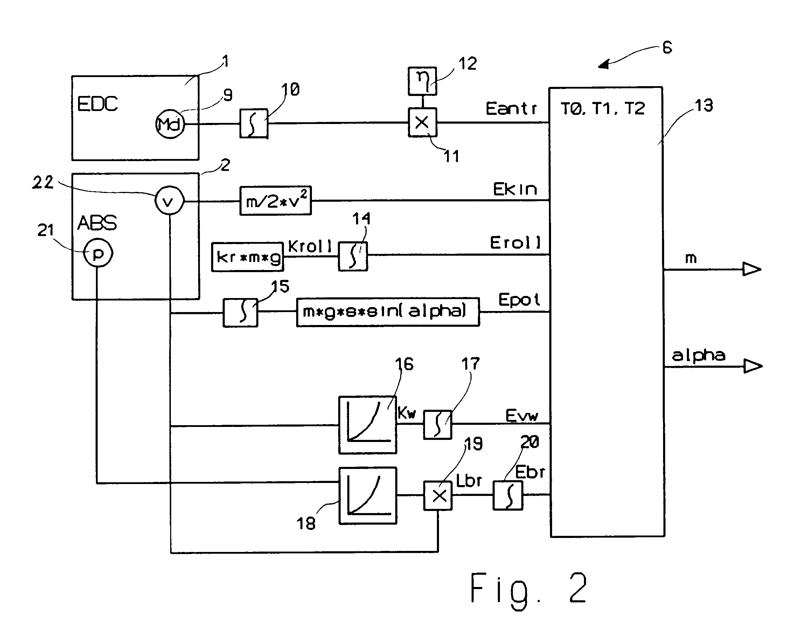

Fig. 2 zeigt detaillierter das Grundprinzip der Recheneinheit 6 der Fig. 1. Die EDC 1 liefert hier ein dem Drehmoment des Antriebsmotors entsprechendes Signal Md, das von einem Meßfühler 9 erfaßt wird. Nach zeitlicher Integration in einem Integrierer 10 und Multiplikation (Multiplizierer 11) mit einem konstanten Faktor, der in einem Speicher 12 gespeichert ist und beispielsweise dem Wirkungsgrad des Antriebsmotors entspricht, erhält man eine Größe $E_{Antr}$, die der dem Fahrzeug zugeführten Antriebsenergie entspricht. Der Wert dieser Antriebsenergie kann auch negativ sein, wenn der Motor im Bremsbetrieb als Motorbremse arbeitet. Dieses der Energie des Antriebsmotors entsprechende Signal wird einer Recheneinheit 13 zugeführt.

Die kinetische Energie des Fahrzeuges bestimmt sich nach der bekannten Energiegleichung $E_{kin} = m/2 * V^2$, wobei m die Gesamtmasse des Zuges und v die Geschwindigkeit sind. Einen "Meßwert" für die Geschwindigkeit v erhält man vom ABS 2. Die Masse m ist im mathematischen Sinne noch eine Unbekannte.

Die nächste zu berücksichtigende Energie ist die Energie des Rollwiderstandes. Die Rollkraft ist proportional dem Produkt aus Masse und Erdbeschleunigung (m $*$ g) und einem fahrzeugspezifischen konstanten Faktor. Nach zeitlicher Integration in einem Integrierer 14 erhält man die Rollenergie $E_{roll}$.

Die potentielle Energie des Fahrzeuges $E_{pot}$ bestimmt sich nach der Gleichung

$$E_{pot} = m * g * s * \sin (alpha),$$

wobei m die Gesamtmasse des Zuges

g die Erdbeschleunigung,

s der zurückgelegte Weg und

alpha der Hangneigungswinkel sind.

Die zurückgelegte Strecke s ist dabei das zeitliche Integral der Geschwindigkeit.

Die Verlustenergie für den Windwiderstand hängt vom Luftwiderstandsbeiwert $c_w$ und der Fahrzeuggeschwindigkeit v ab. Der Funktionszusammenhang zwischen Fahrzeuggeschwindigkeit und Windkraft kann in einer "Tabelle" 16 gespeichert sein, deren Eingangsgröße die Geschwindigkeit v ist. Nach zeitlicher Integration in einem Integrierer 17 erhält man die Verlustenergie für den Windwiderstand $E_{vw}$. Schließlich erhält man die Bremsenergie $E_{br}$ in Abhängigkeit vom Bremsdruck p, der von einem Meßfühler 21 aus dem ABS 2 geliefert wird sowie der Geschwindigkeit v, die ebenfalls von einem Meßfühler 22 vom ABS 2 geliefert wird. Der funktionale Zusammenhang zwischen Bremsdruck und Bremskraft ist ebenfalls in einer Tabelle 18 gespeichert. Multipliziert man die Bremskraft in einem Multiplizierer 19 mit der Geschwindigkeit v so erhält man die Bremsleistung. Wird diese in einem Integrierer 20 integriert, so erhält man die Bremsenergie $E_{br}$.

Alle genannten Energiegrößen zusammen bilden zum jeweiligen Zeitpunkt die Gesamtenergie des Fahrzeugverbundes. Unbekannte Größen hierbei sind die Fahrzeugmasse m und der Hangneigungswinkel $\alpha$. Zum Zeitpunkt $t_0$ läßt sich somit folgende Energiebilanz aufstellen:

$$E_0 = E_{antr}(0) + E_{kin}(0) + E_{pot}(0) - E_{roll}(0) - E_{vw}(0) - E_{br}(0).$$

In gleicher Weise lassen sich zu anderen Zeitpunkten $t_1$ und $t_2$ entsprechende Energiegleichungen für die Energien $E_1$ und $E_2$ aufstellen. Nach dem Energieerhaltungssatz sind die Energien $E_0 = E_1 = E_2$. Setzt man für den Zeitpunkt $t_0$ den Anteil der potentiellen Energie $E_{pot}(0)$, den Energieanteil für den Windwiderstand $E_{vw}(0)$ und den Energieanteil durch Reibungsverluste $E_{roll}(0)$ definitionsgemäß zu Null, so lassen sich folgende zwei Gleichungen aufstellen: $E_0 = E_1$ und $E_0 = E_2$. Damit ergeben sich zwei Gleichungen mit zwei unbekannten Größen (m und $\alpha$) unter der Voraussetzung, daß der Hangabtriebswinkel $\alpha$ zu den Zeitpunkten t0, t1 und t2 konstant ist. Aus diesen beiden Gleichungen lassen sich dann die unbekannten Größen m und $\alpha$ ermitteln und in Abhängigkeit von m die Bremskraftverteilung einstellen.

Theoretisch genügt es, die beschriebenen Vorgänge nur zu drei Zeitpunkten t0, t1 und t2 durchzuführen, da man davon ausgehen kann, daß sich die Fahrzeugmasse während der Fahrt nicht ändert. Zweckmäßigerweise wird man aber zu Beginn einer Fahrt diese Berechnungen mehrfach durchführen, um den Einfluß von Meßfehlern adaptiv auszugleichen, was beispielsweise durch Mittelwertbildung erfolgen kann. Diese Mittelwerte werden dann bei mehreren Messungen nur noch sehr geringfügig schwanken, so daß dann die jeweils eingestellen Parameter für das Anhängerbremsventil so eingestellt sind, daß eine optimale Bremskraftverteilung zwischen Zugfahrzeug und gezogenem Fahrzeug erreicht wird. Ist dieser Parameter einmal eingestellt, so wird er während einer Fahrt nicht mehr verändert. Mit anderen Worten wird das Verfahren der vorliegenden Erfindung nicht zur kontinuierlichen Regelung der Bremskraftverteilung eingesetzt sondern nur zur anfänglichen Einstellung und gegebenenfalls Nachkorrektur der Parameter des Anhängerbremsventiles.

Selbstverständlich kann die Erfindung mit übergeordneten Regelkreisen zusammenarbeiten, wie z. B. einem Blockierschutz oder einer Koppelkraftregelung, die auch den Knickwinkel zwischen Zugfahrzeug und Anhänger bei Kurvenfahrten oder ein drohendes Einknicken bei Überbremsung des Zugfahrzeuges erkennt.

**Patentansprüche**

**1.** Verfahren zum Einstellen der Bremskraftaufteilung zwischen einem Zugfahrzeug und einem Anhänger in Abhängigkeit vom Gewicht des Anhängers mit folgenden Schritten:

- Messen der Fahrzeuggeschwindigkeit (v),
- Messen einer mit der Antriebsenergie des Zugfahrzeuges verknüpften Größe (Md),
- Messen einer mit der Bremsenergie verknüpften Größe (p)
  zu drei verschiedenen Zeitpunkten ($t_0$, $t_1$, $t_2$),
- Ermitteln der Gesamtenergie ($E_0$, $E_1$, $E_2$) des Fahrzeugverbundes zu diesen drei genannten Zeitpunkten aus den gemessenen und aus fahrzeugspezifischen Größen entsprechenden gespeicherten Werten,
- Ermitteln der Fahrzeugmasse (m) und des Hangneigungswinkels ($\alpha$) aus den zu den drei Zeitpunkten ($t_0$, $t_1$, $t_2$) ermittelten Energiewerten und
- automatisches Einstellen der Bremskraftverteilung zwischen Zugfahrzeug und Anhänger in Abhängigkeit von der so ermittelten Fahrzeugmasse (m).

**2.** Verfahren nach Anspruch 1, dadurch gekennzeichnet, daß die Gesamtenergie des Fahrzeugverbundes nach folgender Beziehung ermittelt wird:

$$E = E_{antr} + E_{kin} + E_{pot} - E_{roll} - E_{vw} - E_{br}$$

wobei E die Gesamtenergie des Fahrzeugverbundes,
$E_{antr}$ die Antriebsenergie als Funktion der mit der Antriebsenergie verknüpften Größe (Md),
$E_{kin}$ die kinetische Energie des Fahrzeugverbundes als Funktion der Masse und der Geschwindigkeit ($m/2 * v_2$),
$E_{pot}$ die potentielle Energie als Funktion der Masse, des zurückgelegten Weges und des Hangneigungswinkels nach der Beziehung m * g * s * sin (alpha),
$E_{roll}$ Rollenergieverluste als Funktion der Masse, der Erdbeschleunigung und einer Konstanten,
$E_{vw}$ die Windwiderstandsverluste als Funktion des Windwiderstandsbeiwertes und der Geschwindigkeit
und $E_{br}$ die Bremsenergieverluste als Funktion der Fahrzeuggeschwindigkeit und der mit der Bremsenergie verknüpften Größe (p) sind.

**3.** Verfahren nach Anspruch 2, dadurch gekennzeichnet, daß die Gesamtenergie ($E_0$) zum ersten der drei genannten Meßzeitpunkte ($T_0$) gleich der kinetischen Energie des Fahrzeugverbundes gesetzt wird während alle übrigen Teilenergien zu Null gesetzt werden.

**4.** Verfahren nach einem der Ansprüche 1-3, dadurch gekennzeichnet, daß die drei genannten Meßzeitpunkte ($T_0$, $T_1$, $T_2$) in äquidistanten Zeitabständen zueinander liegen, daß zu allen drei Meßzeitpunkten der Hangneigungswinkel als konstant angesetzt wird und daß die Energie ($E_0$) zum ersten Meßzeitpunkt gleich der Energie ($E_1$) zum zweiten und gleich der Energie ($E_2$) zum dritten Meßzeitpunkt gesetzt wird, woraus dann die Fahrzeugmasse (m) und der Hangneigungswinkel ($\alpha$) ermittelt wird.

**5.** Verfahren nach einem der Ansprüche 1-4, dadurch gekennzeichnet, daß die kinetische Energie ($E_{kin}$) des Fahrzeugverbundes aus der translatorischen Bewegungsenergie und der Rotationsenergie der Fahrzeugräder als Funktion der Fahrzeuggeschwindigkeit und des Trägheitsmomentes der Räder zusammengesetzt wird.

**6.** Vorrichtung zum Einstellen der Bremskraftaufteilung zwischen einem Zugfahrzeug und einem Anhänger in Abhängigkeit vom Gewicht des Anhängers mit

a) mindestens einem Sensor (22) zum Messen der Radumdrehungsgeschwindigkeit mindestens eines Rades oder zum Messen der Fahrzeuggeschwindigkeit,
b) einem Sensor (9) zum Messen einer mit der Antriebsenergie des Antriebsmotors des Zugfahrzeuges verknüpften Größe, wie z. B. des von dem Motor abgegebenen Drehmomentes,
c) einem Sensor (21) zum Messen einer mit der Bremsenergie verknüpften Größe, wie z. B. des Bremsdruckes zu drei verschiedenen Zeitpunkten und
d) einer Recheneinrichtung (6), die mit diesen Sensoren verbunden ist sowie mit weiteren Speichern (3,4,12,16,18), die aus den gemessenen und fahrzeugspezifischen gespeicherten Werten die Gesamtenergie des Fahrzeugverbundes zu den drei Zeitpunkten ermittelt und die aus den für die drei Zeitpunkte ermittelten Gesamtenergiewerten ein dem Hangneigungswinkel entsprechendes Signal und ein der Masse des Anhängers (m) entsprechendes Signal erzeugt, das einem Regler (7) zugeführt wird, der einen Bremsparameter eines Anhängerbremsventiles (8) einstellt.

**Claims**

**1.** Method for adjusting the brake-force distribution between a towing vehicle and a trailer as a function of the weight of the trailer, having the following steps:

- measuring the vehicle velocity (v),
- measuring a variable (Md) linked with the driving energy of the towing vehicle,
- measuring a variable (p) linked with the braking energy at three different instants ($t_0$, $t_1$, $t_2$),
- establishing the total energy ($E_0$, $E_1$, $E_2$) of the composite vehicle at these three above-mentioned instants from the measured values and from stored values corresponding to vehicle-specific variables,

- establishing the vehicle mass (m) and the slope angle of gradient ($\alpha$) from the energy values established at the three instants ($t_0$, $t_1$, $t_2$), and
- automatically adjusting the brake-force distribution between towing vehicle and trailer as a function of the vehicle mass (m) established in this way.

2. Method according to claim 1, characterised in that the total energy of the composite vehicle is established according to the following relation:

$$E = E_{antr} + E_{kin} + E_{pot} - E_{roll} - E_{vw} - E_{br}$$

wherein

E is the total energy of the composite vehicle,
$E_{antr}$ is the driving energy as a function of the variable (Md) linked with the driving energy,
$E_{kin}$ is the kinetic energy of the composite vehicle as a function of the mass and the velocity ($m/2 * v^2$),
$E_{pot}$ is the potential energy, as a function of the mass, of the path covered and of the slope angle of gradient according to the relation $m * g * s * \sin(alpha)$,
$E_{roll}$ is the rolling-energy losses as a function of the mass, the acceleration due to gravity and a constant,
$E_{vw}$ is the wind-resistance losses as a function of the wind-resistance coefficient and the velocity, and
$E_{br}$ is the braking energy losses as a function of the vehicle velocity and the variable (p) linked with the braking energy.

3. Method according to claim 2, characterised in that the total energy ($E_0$) at the first of the three above-mentioned measuring instants ($T_0$) is equated to the kinetic energy of the composite vehicle while all other partial energies are set to zero.

4. Method according to one of claims 1 to 3, characterised in that the three above-mentioned measuring instants ($T_0$, $T_1$, $T_2$) are at equidistant time intervals with respect to each other, in that at all three measuring instants, the slope angle of gradient is set as constant, and in that the energy ($E_0$) at the first measuring instant is equated to the energy ($E_1$) at the second instant and equated to the energy ($E_2$) at the third measuring instant, from which the vehicle mass (m) and the slope angle of gradient ($\alpha$) are then established.

5. Method according to one of claims 1 to 4, characterised in that the kinetic energy ($E_{kin}$) of the composite vehicle is made up of the translational energy of motion and the rotational energy of the vehicle wheels as a function of the vehicle velocity and the moment of inertia of the wheels.

6. Device for adjusting the brake-force distribution between a towing vehicle and a trailer as a function of the weight of the trailer, having

a) at least one sensor (22) for measuring the wheel speed of at least one wheel or for measuring the vehicle velocity,
b) a sensor (9) for measuring a variable linked with the driving energy of the driving motor of the towing vehicle, such as, for example, the torque delivered by the motor,
c) a sensor (21) for measuring a variable linked with the braking energy, such as, for example, the braking pressure at three different instants, and
d) a calculating device (6), which is connected to these sensors and to further memories (3, 4, 12, 16, 18), which establishes from the measured and vehicle-specific stored values the total energy of the composite vehicle at the three instants and which generates from the total-energy values established for the three instants a signal corresponding to the slope angle of gradient and a signal corresponding to the mass of the trailer (m), which signal is supplied to a controller (7) which adjusts a braking parameter of a trailer brake valve (8).

**Revendications**

1. Procédé pour régler la répartition de la force de freinage entre un véhicule tracteur et une remorque, en fonction du poids de la remorque, comportant les étapes suivantes:

- mesure de la vitesse (v) des véhicules,
- mesure d'une grandeur (Md) liée à l'énergie motrice du véhicule tracteur,
- mesure d'une grandeur (p) liée à l'énergie de freinage à trois instants différents ($t_0$, $t_1$, $t_2$),
- détermination de l'énergie totale ($E_0$, $E_1$, $E_2$) de l'ensemble de véhicules combinés à ces trois instants mentionnés, à partir des valeurs mesurées et de valeurs mémorisées correspondant à des grandeurs spécifiques aux véhicules,
- détermination de la masse (m) des véhicules et de l'angle d'inclinaison ($\alpha$) de la pente, à partir des valeurs d'énergie déterminées aux trois instants ($t_0$, $t_1$, $t_2$), et
- réglage automatique de la répartition de la force de freinage entre le véhicule tracteur et la remorque, en fonction de la masse (m), ainsi déterminée, des véhicules.

2. Procédé selon la revendication 1, caractérisé en ce que l'énergie totale de l'ensemble de véhicules combinés est déterminée d'après la relation suivante:

$$E = E_{antr} + E_{kin} + E_{pot} - E_{roll} - E_{vw} - E_{br}$$

E étant l'énergie totale de l'ensemble de véhicules combinés,

$E_{antr}$ étant l'énergie motrice sous forme d'une fonction de la grandeur (Md) liée à l'énergie motrice,

$E_{kin}$ étant l'énergie cinétique de l'ensemble de véhicules combinés, sous forme d'une fonction de la masse et de la vitesse ($m/2 * v_2$),

$E_{pot}$ étant l'énergie potentielle sous forme d'une fonction de la masse, du chemin parcouru et de l'angle d'inclinaison de la pente, d'après la relation m * g * s * sin (alpha),

$E_{roll}$ étant les pertes dues à l'énergie de roulis, sous forme d'une fonction de la masse, de l'accélération de la pesanteur et d'une constante,

$E_{vw}$ étant les pertes dues à la résistance du vent, sous forme d'une fonction du coefficient de résistance du vent et de la vitesse, et

$E_{br}$ étant les pertes dues à l'énergie de freinage, sous forme d'une fonction de la vitesse des véhicules et de la grandeur (p) liée à l'énergie de freinage.

3. Procédé selon la revendication 2, caractérisé en ce que l'énergie totale ($E_0$) au premier des trois instants de mesure mentionnés ($T_0$) est fixée égale à l'énergie cinétique de l'ensemble de véhicules combinés, tandis que toutes les autres énergies partielles sont fixées à zéro.

4. Procédé selon l'une des revendications 1 à 3, caractérisé en ce que les trois instants de mesure mentionnés ($T_0$, $T_1$, $T_2$) se situent à des intervalles de temps identiques l'un par rapport à l'autre, en ce que l'angle d'inclinaison de la pente est supposé être constant aux trois instants de mesure sans exception et en ce que l'énergie ($E_0$) au premier instant de mesure est fixée égale à l'énergie ($E_1$) au deuxième instant de mesure et égale à l'énergie ($E_2$) au troisième instant de mesure, grâce à quoi la masse (m) des véhicules et l'angle d'inclinaison ($\alpha$) de la pente sont alors déterminés.

5. Procédé selon l'une des revendications 1 à 4, caractérisé en ce que l'énergie cinétique ($E_{kin}$) de l'ensemble de véhicules combinés est composée de l'énergie de déplacement en translation et de l'énergie de rotation des roues des véhicules, sous forme d'une fonction de la vitesse des véhicules et du moment d'inertie des roues.

6. Dispositif pour régler la répartition de la force de freinage entre un véhicule tracteur et une remorque, en fonction du poids de la remorque, comportant

a) au moins un capteur (22) destiné à mesurer la vitesse de rotation d'au moins une roue ou à mesurer la vitesse des véhicules,

b) un capteur (9) destiné à mesurer une grandeur liée à l'énergie motrice du moteur d'entraînement du véhicule tracteur, comme par exemple du couple de rotation délivré par le moteur,

c) un capteur (21) destiné à mesurer une grandeur liée à l'énergie de freinage, comme par exemple la pression de freinage, à trois instants différents, et

d) un appareil de calcul (6), qui est relié à ces capteurs ainsi qu'à des mémoires supplémentaires (3, 4, 12, 16, 18), qui détermine l'énergie totale de l'ensemble de véhicules combinés aux trois instants, à partir des valeurs mesurées et de valeurs mémorisées spécifiques aux véhicules, et qui, à partir des valeurs d'énergie totale déterminées pour les trois instants, engendre un signal correspondant à l'angle d'inclinaison de la pente et un signal correspondant à la masse de la remorque (m), qui sont amenés à un régulateur (7), lequel règle un paramètre de freinage d'une soupape de frein (8) de la remorque.

Fig. 1

EP 0 676 319 B1

Fig. 2